# EUROPEAN PATENT APPLICATION

(11) **EP 4 752 402 A1**
(43) Date of publication of application: **03.06.2026**
(21) Application number: 24845590.9
(22) Date of filing: 22.07.2024
(51) Int. Cl.: F16J 15/3244, F16J 15/18, F16J 15/3204

(54) **SEAL RING**

(30) Priority: 27.07.2023 JP 2023122679
(71) Applicant: Eagle Industry Co., Ltd., Minato-ku Tokyo 105-8587 (JP)
(72) Inventor: GOTO Kensaku, Tokyo 105-8587 (JP); OTA Takafumi, Tokyo 105-8587 (JP)
(74) Representative: Patentquadrat Patentanwaltsgesellschaft mbH
(86) International application number: PCT/JP2024/026164
(87) International publication number: WO 2025/023214

(57) **Abstract**

A seal ring capable of maintaining parallelism between sliding surfaces is provided. The seal ring includes a sliding surface 3a that rotates and slides relative to a shaft 1 or a housing 2 through which the shaft 1 is inserted; and an installation surface 3b installed on the other of the shaft 1 and the housing 2. The seal ring partitions a first space H, which is located on a side opposite to a side on which the sliding surface 3a intersects the installation surface 3b, off from a second space L disposed on the side on which the sliding surface 3a intersects the installation surface 3b. The sliding surface 3a is provided with a dynamic pressure generation mechanism 36 communicating with the first space H and including a dynamic pressure generation portion 36b, and a fluid recovery mechanism 37 communicating with the first space H and disposed closer to the first space H side than the dynamic pressure generation portion 36b.

## Description

### {TECHNICAL FIELD}

The present invention relates to a seal ring used for sealing a gap between a shaft and a housing, particularly to a seal ring that is mounted and used in an annular groove, namely, a so-called stuffing box.

### {BACKGROUND ART}

As an example of a shaft sealing device that prevents leakage of a sealed fluid, there is a seal ring having an annular shape and disposed between a rotating shaft and a housing of a rotating machine. In such a seal ring, in recent years, reducing the loss of energy caused by sliding has been desired for environmental measures and the like.

For example, a seal ring described in Patent Citation 1 is fixed to a housing, and is loosely fitted into an annular groove, which is provided in a rotating shaft, so as to be rotatable, and a side surface of the seal ring and a side surface of the annular groove are slidable relative to each other.

In addition, an oil groove communicating with an oil chamber side and a wedge effect generation groove extending in a circumferential direction from the oil groove are provided on the side surface of the seal ring. When the rotating shaft rotates, hydraulic oil is taken in from an oil chamber through the oil groove, dynamic pressure is generated due to the wedge effect of the wedge effect generation groove, the side surface of the seal ring is lifted from the side surface of the annular groove, and an oil film is formed. Accordingly, the frictional force between the side surface of the seal ring and the side surface of the annular groove can be reduced.

### {CITATION LIST}

### {Patent Literature}

### Patent Citation 1: JP H9-210211 A (Page 4, FIG. 4)

### {SUMMARY OF INVENTION}

### {Technical Problem}

In the seal ring of Patent Citation 1, the seal ring is disposed to protrude toward an outer diameter side beyond the annular groove of the rotating shaft, and dynamic pressure caused by the wedge effect generation groove is not generated at an outer diameter-side portion of the side surface of the seal ring. According to this configuration, since dynamic pressure is generated only at an inner diameter-side portion of the side surface of the seal ring, twisting occurs in the seal ring such that the inner diameter-side portion moves away from the side surface of the annular groove and the outer diameter-side portion moves closer to the side surface side of the annular groove, and the dynamic pressure generation effect decreases, which is a risk.

The present invention has been made in view of such problems, and an object of the present invention is to provide a seal ring capable of maintaining parallelism between sliding surfaces.

### {Solution to Problem}

In order to solve the foregoing problems, a seal ring according to the present invention is a seal ring including: a sliding surface that rotates and slides relative to a shaft or a housing through which the shaft is inserted; and an installation surface that intersects the sliding surface and that is installed on the other of the shaft and the housing, wherein the seal ring partitions a first space, which is located on a side opposite to a side on which the sliding surface intersects the installation surface, off from a second space disposed on the side on which the sliding surface intersects the installation surface, and the sliding surface is provided with a dynamic pressure generation mechanism communicating with the fist space and including a dynamic pressure generation portion, and a fluid recovery mechanism communicating with the first space and disposed closer to the first space side than the dynamic pressure generation portion. According to the aforesaid feature of the present invention, since, of the positive pressure generated in the vicinity of the dynamic pressure generation portion of the dynamic pressure generation mechanism, the pressure on the first space side is released via the fluid recovery mechanism, the pressure on the first space side of the sliding surface can be suppressed. Therefore, twisting that causes the first space side of the sliding surface to move away from a mating sliding surface and causes the second space side to move closer thereto is less likely to occur, and parallelism between the sliding surfaces can be maintained.

It may be preferable that the fluid recovery mechanism is formed to be long in a circumferential direction. According to this preferable configuration, the flow of a fluid toward a relative rotation downstream side in the circumferential direction is generated in the fluid recovery mechanism due to a relative sliding, and the fluid between the sliding surfaces is easily recovered due to the flow of the fluid in the fluid recovery mechanism.

It may be preferable that the fluid recovery mechanism communicates with the first space in the circumferential direction. According to this preferable configuration, since the fluid recovery mechanism communicates with the first space over a wide circumferential range, the pressure on the first space side of the sliding surface is easily reduced.

It may be preferable that the fluid recovery mechanism is a deep groove. According to this preferable configuration, since a large amount of the fluid between the sliding surfaces can be taken in, the pressure on the first space side of the sliding surface is easily reduced.

It may be preferable that the fluid recovery mechanism does not communicate with the dynamic pressure generation mechanism, and becomes shallower from a relative rotation downstream side toward a relative rotation upstream side. According to this preferable configuration, since a relative negative pressure can be generated on the relative rotation upstream side of the fluid recovery mechanism, the fluid between the sliding surfaces is easily taken in.

It may be preferable that the dynamic pressure generation mechanism is composed of a fluid introduction groove communicating with the first space, and a dynamic pressure generation groove that extends in a circumferential direction from the fluid introduction groove and that is shallower than the fluid introduction groove. According to this preferable configuration, since the sealed fluid can be efficiently introduced into the dynamic pressure generation groove from the fluid introduction groove that is a deep groove, the dynamic pressure generation effect of the dynamic pressure generation portion is enhanced.

It may be preferable that the dynamic pressure generation groove becomes shallower from a relative rotation upstream side toward a relative rotation downstream side. According to this preferable configuration, the dynamic pressure generation effect of the dynamic pressure generation portion is enhanced.

It may be preferable that the fluid recovery mechanism communicates with a relative rotation downstream side of the fluid introduction groove. According to this preferable configuration, since the fluid introduction groove communicates with the fluid recovery mechanism in addition to the first space, a sufficient amount of the fluid is supplied to the dynamic pressure generation mechanism, and therefore, positive pressure can be reliably generated.

### {BRIEF DESCRIPTION OF DRAWINGS}

FIG. 1 is a schematic cross-sectional view illustrating a shaft sealing device to which a seal ring according to a first embodiment of the present invention is applied.
FIG. 2A is a view of the seal ring when viewed in an axial direction, FIG. 2B is an enlarged view of a cut portion when viewed in the axial direction, and FIG. 2C is a view taken in the direction of arrow A, in the first embodiment.
FIG. 3 is an enlarged view of a dynamic pressure generation groove and a fluid recovery groove in the first embodiment when viewed in the axial direction.
FIG. 4 is a schematic cross-sectional view illustrating a state where dynamic pressure is generated by the dynamic pressure generation groove in the first embodiment.
FIG. 5A is an enlarged view of a dynamic pressure generation groove and a fluid recovery groove of a seal ring according to a second embodiment of the present invention when viewed in the axial direction, FIG. 5B is a cross-sectional view taken along line B-B, and FIG. 5C is a cross-sectional view taken along line C-C.
FIG. 6 is an enlarged view of a dynamic pressure generation groove and a fluid recovery groove of a seal ring according to a third embodiment of the present invention when viewed in the axial direction.
FIG. 7 is an enlarged view of a dynamic pressure generation groove and a fluid recovery groove of a seal ring according to a fourth embodiment of the present invention when viewed in the axial direction.
FIG. 8 is an enlarged view of a dynamic pressure generation groove and a fluid recovery groove of a seal ring according to a fifth embodiment of the present invention when viewed in the axial direction.
FIG. 9 is an enlarged view of a dynamic pressure generation groove and a fluid recovery groove of a seal ring according to a sixth embodiment of the present invention when viewed in the axial direction.
FIG. 10 is an enlarged view of a dynamic pressure generation groove and a fluid recovery groove of a seal ring according to a seventh embodiment of the present invention when viewed in the axial direction.
FIG. 11 is a schematic cross-sectional view illustrating a shaft sealing device to which a seal ring according to an eighth embodiment of the present invention is applied.
FIG. 12 is a schematic cross-sectional view illustrating a shaft sealing device to which a seal ring according to a ninth embodiment of the present invention is applied.

### {DESCRIPTION OF EMBODIMENTS}

Modes for implementing a seal ring according to the present invention will be described below based on embodiments.

### {First embodiment}

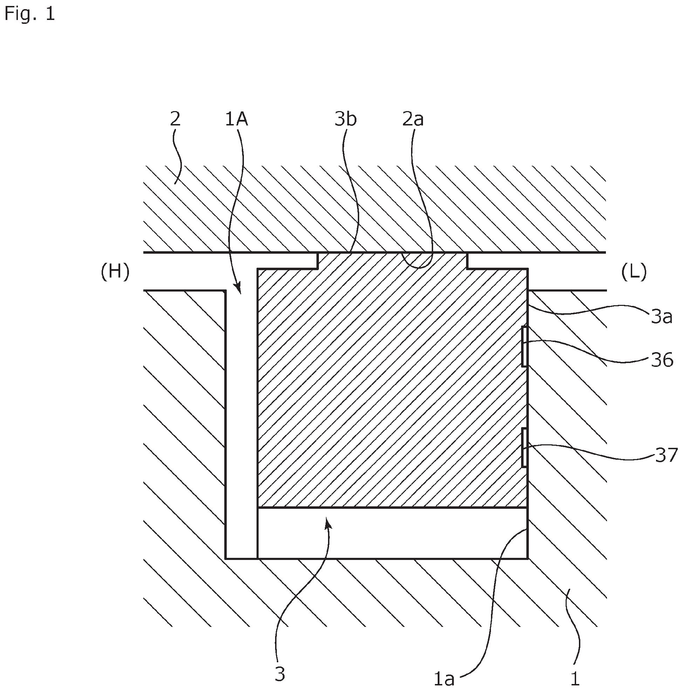

A seal ring according to a first embodiment of the present invention will be described with reference to FIGS. 1 to 4. Incidentally, in the present embodiment, in the following description, the right side of the paper sheet of FIG. 1 represents a right side of the seal ring, and the left side of the paper sheet of FIG.1 represents a left side of the seal ring. Incidentally, for convenience of description, a dynamic pressure generation groove 36, a fluid recovery groove 37, and the like are illustrated as being larger than the actual dimensions.

A shaft sealing device illustrated in FIG. 1 can be suitably used for an application for sealing an annular gap between a rotating shaft 1 and a housing 2 that rotate relative to each other, for example, in a rotating device in order to hold hydraulic pressure. In the present embodiment, a case where the present invention is applied to such an application will be described as an example. Incidentally, FIG. 1 illustrates a state where no dynamic pressure is generated in the dynamic pressure generation groove 36 of a seal ring 3.

The shaft sealing device is mainly composed of the rotating shaft 1 serving as a shaft; the housing 2; and the seal ring 3. The seal ring 3 is loosely fitted into an annular groove 1A having a rectangular cross-section that is provided in the rotating shaft 1.

As will be described later, a right surface 3a of the seal ring 3 that serves as a sliding surface slidable against a right surface 1a serving as a mating sliding surface constituting the annular groove 1A, and an outer peripheral surface 3b of the seal ring 3 that serves as an installation surface is brought into press contact with an inner peripheral surface 2a of the housing 2 that serves as an installed surface. Namely, the installation surface and the installed surface only need to be in contact with each other, and for example, in a situation where lubrication of the sliding surfaces is insufficient, such as during start-up of the machine, the installation surface and the installed surface are assembled in a state where sliding therebetween in a circumferential direction is allowed.

In addition, the right surface 3a of the seal ring 3 includes a portion that comes into contact with the right surface 1a of the annular groove 1A, and a portion disposed closer to an outer diameter side than the right surface 1a of the annular groove 1A, and in the present embodiment, the sliding surface of the seal ring 3 refers to the entirety of the right surface 3a of the seal ring 3. Namely, the sliding surface of the seal ring 3 includes a portion that comes into contact with the right surface 1a of the annular groove 1A, and a portion that is flush with the portion.

In addition, the corner between an outer peripheral surface 3b and the right surface 3a of the seal ring 3 and the corner between the outer peripheral surface 3b and a left surface are cut out to form step portions. Accordingly, the press-contact state between the outer peripheral surface 3b and the inner peripheral surface 2a is easily held. The reason is that the seal ring 3 itself can undergo minute deformation when an external force such as fluid pressure acts on the seal ring 3.

In the present embodiment, the fluid pressure in a region on the left side of FIG. 1 is configured to change, and the seal ring 3 plays a role in holding the fluid pressure in a target sealed region (H) on the left side of the figure. The target sealed region (H) as a first space is disposed on the side opposite to the outer peripheral surface 3b with reference to the right surface 3a of the seal ring 3, and a leakage region (L) as a second space is disposed on the outer peripheral surface 3b side with reference to the right surface 3a of the seal ring 3.

Incidentally, although not illustrated, when the machine using the seal ring 3 is in a stopped state, the fluid pressure in the target sealed region (H) is low and is the same as the pressure in the leakage region (L) on the right side of FIG. 1, and when the machine is in an operation state, the fluid pressure in the sealed region (H) is higher than that in the leakage region (L).

The seal ring 3 is made of a resin material such as polyetheretherketone (PEEK), polyphenylene sulfide (PPS), or polytetrafluoroethylene (PTFE).

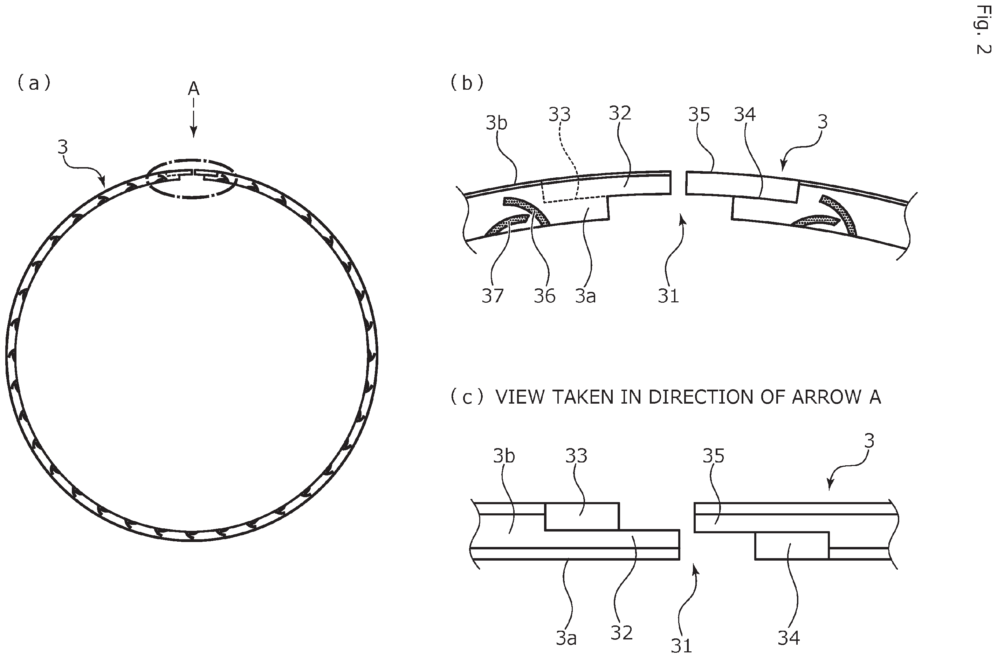

As illustrated in FIGS. 2A to 2C, a cut portion 31 is formed in the seal ring 3 at one location in the circumferential direction. Incidentally, FIG. 2B is an enlarged view of an enclosed portion in FIG. 2A.

The cut portion 31 is a known special step cut that is cut in a stepped shape when viewed from both axial sides (see FIGS. 2A and 2B) and the outer diameter side (see FIG. 2C). Accordingly, in the seal ring 3, a first fitting protrusion 32 and a first fitting recess 33 are provided on the outer peripheral surface side on one circumferential side, and a second fitting recess 34 into which the first fitting protrusion 32 fits and a second fitting protrusion 35 that fits into the first fitting recess 33 are provided on the outer peripheral surface side on the other circumferential side.

Incidentally, the cut portion 31 may be formed not only by cutting through machining but also by molding. In addition, here, a special step cut has been illustrated as one example of the cut portion 31; however, the present invention is not limited thereto, and a known straight cut, bias cut, step cut, or the like can also be employed. Incidentally, when a low elastic material (for example, PTFE or the like) is employed as the material for the seal ring 3, the cut portion may not be provided.

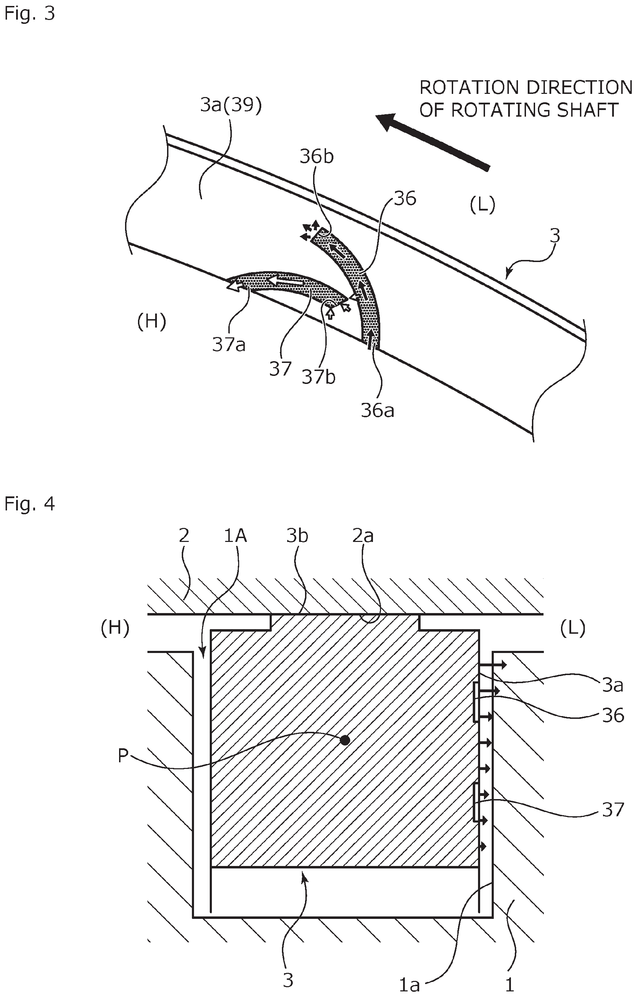

In addition, as illustrated in FIGS. 2B and 3, a plurality of the dynamic pressure generation grooves 36 serving as dynamic pressure generation mechanisms and a plurality of the fluid recovery grooves 37 serving as fluid recovery mechanisms are formed on the right surface 3a of the seal ring 3 in the circumferential direction. In the present embodiment, a plurality of sets of one dynamic pressure generation groove 36 and one fluid recovery groove 37 disposed downstream of the dynamic pressure generation groove 36 in a rotation direction of the rotating shaft 1 are provided on the right surface 3a of the seal ring 3 in the circumferential direction.

Incidentally, the number of the dynamic pressure generation grooves 36 and the fluid recovery grooves 37 can be freely changed. For example, the number of the dynamic pressure generation grooves 36 and the number of the fluid recovery grooves 37 provided on the right surface 3a of the seal ring 3 may be different from each other.

Particularly, as illustrated in FIG. 3, the dynamic pressure generation groove 36 extends from an inner diameter side toward the outer diameter side while being inclined toward a downstream side in the rotation direction of the rotating shaft 1. The dynamic pressure generation groove 36 is formed in an arc shape that is convex toward the outer diameter side when viewed in an axial direction. The dynamic pressure generation groove 36 has a circumferential component larger than a radial component. Incidentally, the dynamic pressure generation groove 36 is not limited to having an arc shape when viewed in the axial direction, and for example, may extend linearly when viewed in the axial direction.

An inner diameter end 36a of the dynamic pressure generation groove 36 communicates with the target sealed region (H), and an outer diameter end 36b of the dynamic pressure generation groove 36 that serves as a dynamic pressure generation portion is closed by a land 39.

The outer diameter end 36b of the dynamic pressure generation groove 36 is disposed closer to the outer diameter side than the center of the radial width of the right surface 3a of the seal ring 3. In other words, the outer diameter end 36b of the dynamic pressure generation groove 36 is disposed toward the outer diameter side of the right surface 3a of the seal ring 3, namely, toward the leakage region (L) side.

The fluid recovery groove 37 extends from the inner diameter side toward the outer diameter side while being inclined toward an upstream side in the rotation direction of the rotating shaft 1. The fluid recovery groove 37 is formed in an arc shape that is convex toward the outer diameter side when viewed in the axial direction. The fluid recovery groove 37 has a circumferential component larger than a radial component. Incidentally, the fluid recovery groove 37 is not limited to having an arc shape when viewed in the axial direction, and for example, may extend linearly when viewed in the axial direction.

An inner diameter end 37a of the fluid recovery groove 37 communicates with the target sealed region (H), and an outer diameter end 37b of the fluid recovery groove 37 is closed by the land 39. In addition, the fluid recovery groove 37 and the dynamic pressure generation groove 36 are partitioned off from each other in the circumferential direction by the land 39.

The outer diameter end 37b of the fluid recovery groove 37 is disposed closer to the inner diameter side than the center of the radial width of the right surface 3a of the seal ring 3. In other words, the outer diameter end 37b of the fluid recovery groove 37 is disposed toward the inner diameter side of the right surface 3a of the seal ring 3, namely, toward the target sealed region (H) side.

Incidentally, in the present embodiment, the dynamic pressure generation groove 36 and the fluid recovery groove 37 are formed to the same depth.

In addition, since it is essential for the dynamic pressure generation groove 36 to generate dynamic pressure over a wide radial range of the right surface 3a, as described above, the dynamic pressure generation groove 36 is disposed closer to the outer diameter side than the center of the radial width of the right surface 3a. Meanwhile, since the fluid recovery groove 37 only needs to be able to suppress excessive pressure on the inner diameter side of the right surface 3a, it is sufficient that the fluid recovery groove 37 is disposed closer to the inner diameter side than the dynamic pressure generation groove 36, and as described above, it is even better if the outer diameter end 37b is disposed closer to the inner diameter side than the center of the radial width of the right surface 3a of the seal ring 3.

When the right surface 3a of the seal ring 3 and the right surface 1a of the annular groove 1A slide relative to each other, oil in the dynamic pressure generation groove 36 moves toward the outer diameter end 36b, and positive pressure is generated at the outer diameter end 36b and in the vicinity thereof. Accordingly, since the right surface 3a of the seal ring 3 and the right surface 1a of the annular groove 1A are slightly separated from each other (see FIG. 4), and an oil film is formed, the frictional force between the right surface 3a of the seal ring 3 and the right surface 1a of the annular groove 1A can be reduced. Incidentally, the oil is constantly supplied into the dynamic pressure generation groove 36 from the target sealed region (H) through the inner diameter end 36a.

Meanwhile, the oil in the fluid recovery groove 37 moves from the outer diameter end 37b toward the inner diameter end 37a, and is discharged into the target sealed region (H). Accordingly, a relative negative pressure is generated in the fluid recovery groove 37, and the fluid between the right surface 3a of the seal ring 3 and the right surface 1a of the annular groove 1A is recovered. Incidentally, a relative negative pressure is generated throughout the entirety of the fluid recovery groove 37; however, a relatively large negative pressure is generated particularly in the vicinity of the outer diameter end 37b. Namely, the force to suction the fluid becomes stronger.

In such a manner, since a relative negative pressure is generated in the fluid recovery groove 37, as illustrated in FIG. 4, of the positive pressure generated at the outer diameter end 36b of the dynamic pressure generation groove 36 and in the vicinity thereof, the pressure on the inner diameter side, namely, on the target sealed region (H) side, between the right surface 3a of the seal ring 3 and the right surface 1a of the annular groove 1A can be reduced.

Next, the state of the seal ring 3 when the rotating shaft 1 rotates will be described with reference to FIGS. 1 and 4.

Referring to FIG. 1, when the machine is operated, the fluid pressure in the target sealed region (H) becomes higher than that in the leakage region (L), so that the seal ring 3 is subjected to a force of the diameter-expanding direction due to the fluid pressure in the sealed region (H), and the outer peripheral surface 3b of the seal ring 3 is brought into press contact with the inner peripheral surface 2a of the housing 2. Namely, the seal ring 3 is fixed to the housing 2.

In addition, the right surface 3a of the seal ring 3 is brought into press contact with and is slid against the right surface 1a of the annular groove 1A of the rotating shaft 1 by the fluid pressure in the target sealed region (H).

As illustrated in FIG. 4, when the right surface 3a of the seal ring 3 and the right surface 1a of the annular groove 1A slide relative to each other, dynamic pressure is generated by the dynamic pressure generation groove 36, and the right surface 3a of the seal ring 3 and the right surface 1a of the annular groove 1A are slightly separated from each other. Incidentally, in FIG. 4, for convenience of description, the separation width between the right surface 3a of the seal ring 3 and the right surface 1a of the annular groove 1A is illustrated as being larger than the actual width.

The right surface 3a of the seal ring 3 has a larger diameter than the right surface 1a of the annular groove 1A, and the dynamic pressure generation groove 36 is not provided in a portion of the right surface 3a of the seal ring 3, the portion protruding toward the outer diameter side beyond the right surface 1a of the annular groove 1A. Accordingly, a larger dynamic pressure acts on the inner diameter side of the right surface 3a of the seal ring 3 than on the outer diameter side. Namely, a twisting force acts on the seal ring 3 such that the inner diameter side of the right surface 3a of the seal ring 3 moves away from the right surface 1a of the annular groove 1A more than the outer diameter side.

In detail, a force acts on the seal ring 3 to tilt the right surface 3a of the seal ring 3 with respect to the right surface 1a of the annular groove 1A such that an inner diameter-side portion of the seal ring 3 with respect to a center point P of a cross-section thereof moves away from the right surface 1a of the annular groove 1A and an outer diameter-side portion of the seal ring 3 with respect to the center point P moves closer to the right surface 1a of the annular groove 1A.

The fluid recovery groove 37 disposed closer to the target sealed region (H) side than the outer diameter end 36b of the dynamic pressure generation groove 36 is provided on the right surface 3a of the seal ring 3 of the first embodiment. According to this configuration, since, of the positive pressure generated in the vicinity of the outer diameter end 36b of the dynamic pressure generation groove 36, the pressure on the target sealed region (H) side is released to the target sealed region (H) via the fluid recovery groove 37, the pressure on the target sealed region (H) side between the right surface 3a of the seal ring 3 and the right surface 1a of the annular groove 1A can be suppressed.

Therefore, twisting that causes the target sealed region (H) side of the right surface 3a of the seal ring 3 to move away from the right surface 1a of the annular groove 1A and causes the leakage region (L) side to move closer thereto is less likely to occur, and parallelism between the right surface 3a of the seal ring 3 and the right surface 1a of the annular groove 1A can be maintained. Therefore, contact between the right surface 3a of the seal ring 3 and the right surface 1a of the annular groove 1A can be avoided, and the dynamic pressure effect provided by the dynamic pressure generation groove 36 can be prevented from decreasing.

In addition, the fluid recovery groove 37 has a circumferential component larger than a radial component, namely, is formed to be long in the circumferential direction. Therefore, the fluid recovery groove 37 can recover the fluid between the right surfaces 1a and 3a over a wide circumferential range.

Incidentally, in the present embodiment, a mode in which the dynamic pressure generation grooves 36 and the fluid recovery grooves 37 are provided only on the right surface 3a of the seal ring 3 has been provided as an example; however, the dynamic pressure generation grooves and the fluid recovery grooves may also be provided on the left surface of the seal ring 3. According to this configuration, for example, when the pressure balance between the regions on both sides is reversed from the state illustrated in FIG. 1, the seal ring 3 moves to the left side, and the left surface of the seal ring 3 comes into contact with and slides against a left surface of the annular groove 1A, so that the fluid can be recovered by the fluid recovery grooves on the left side while dynamic pressure is generated in the dynamic pressure generation grooves on the left side. In addition, the seal ring 3 can be assembled regardless of orientation, and the work efficiency can also be improved.

In addition, in the present embodiment, a mode in which the depth of the dynamic pressure generation groove 36 is constant has been provided as an example; however, the depth may vary. For example, the dynamic pressure generation groove 36 may gradually become shallower from the inner diameter end 36a toward the outer diameter end 36b.

In addition, in the present embodiment, a mode in which the depth of the fluid recovery groove 37 is the same as the depth of the dynamic pressure generation groove 36 has been provided as an example; however, the fluid recovery groove 37 may be deeper than the dynamic pressure generation groove 36. According to this configuration, in the first embodiment, the fluid is mainly recovered from the vicinity of the outer diameter end 37b of the fluid recovery groove 37; however, when the fluid recovery groove is a deep groove, the entirety of the fluid recovery groove can recover the fluid.

In addition, in the present embodiment, a mode in which the depth of the fluid recovery groove 37 is constant has been provided as an example; however, the depth may vary. For example, the fluid recovery groove 37 may gradually become shallower from the inner diameter end 37a toward the outer diameter end 37b.

In addition, in the present embodiment, a mode in which the fluid recovery groove 37 and the dynamic pressure generation groove 36 do not communicate with each other has been provided as an example; however, the fluid recovery groove 37 and the dynamic pressure generation groove 36 may communicate with each other.

### {Second embodiment}

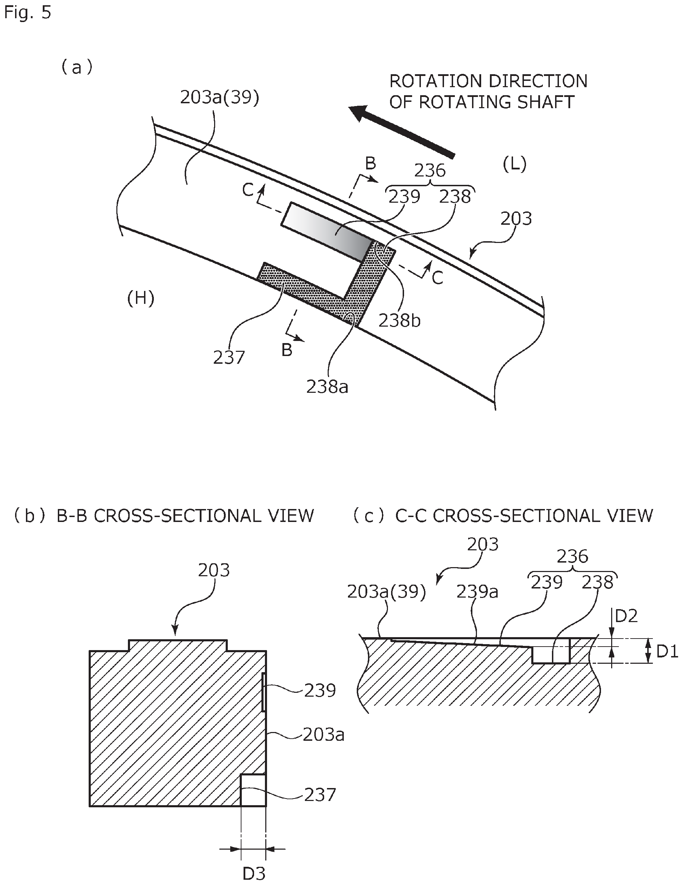

Next, a seal ring according to a second embodiment of the present invention will be described with reference to FIG. 5. Incidentally, the description of configurations that are the same as and overlap with the configurations of the first embodiment will be omitted.

As illustrated in FIG. 5A, a dynamic pressure generation groove 236 and a fluid recovery groove 237 are provided on a right surface 203a of a seal ring 203 of the second embodiment.

The dynamic pressure generation groove 236 includes a first groove portion 238 serving as a fluid introduction groove and a second groove portion 239 serving as a dynamic pressure generation groove.

The first groove portion 238 extends linearly in a radial direction from an inner diameter end 238a toward an outer diameter end 238b. The inner diameter end 238a communicates with the target sealed region (H). The outer diameter side of the outer diameter end 238b is closed by the land 39.

The second groove portion 239 extends in an arc shape from the outer diameter end 238b side of the first groove portion 238 toward the downstream side in the rotation direction of the rotating shaft 1. The second groove portion 239 is formed such that a circumferential length is longer than a radial groove width.

The second groove portion 239 becomes shallower from the upstream side toward the downstream side in the rotation direction of the rotating shaft 1. In detail, a bottom surface 239a of the second groove portion 239 extends linearly from a side wall portion of the first groove portion 238 to the land 39 (see FIG. 5C). Incidentally, the bottom surface 239a of the second groove portion 239 may have a stepped shape.

The fluid recovery groove 237 extends in an arc shape from the inner diameter end 238a side of the first groove portion 238 toward the downstream side in the rotation direction of the rotating shaft 1. The fluid recovery groove 237 is formed such that a circumferential length is longer than a radial groove width.

The fluid recovery groove 237 communicates with the target sealed region (H) in the circumferential direction. In such a manner, since the fluid recovery groove 237 communicates with the target sealed region (H) over a wide circumferential range, the pressure on the target sealed region (H) side between the right surface 203a of the seal ring 203 and the right surface 1a of the annular groove 1A is easily reduced.

Incidentally, in the present embodiment, a mode in which the fluid recovery groove 237 communicates with the target sealed region (H) over the entire circumferential length has been provided as an example; however, the fluid recovery groove 237 only needs to communicate with the target sealed region (H) over a range longer than the radial groove width. For example, a part of the fluid recovery groove 237 may not communicate with the target sealed region (H), and the other portion may communicate with the target sealed region (H) over a range longer than the radial groove width.

As illustrated in FIGS. 5B and 5C, a depth D1 of the first groove portion 238 is deeper than a depth D2 of the second groove portion 239 (D1 > D2). Specifically, the depth D1 of the first groove portion 238 is approximately 25 times the depth D2 of the second groove portion 239. Incidentally, the depth D2 of the second groove portion 239 here refers to the depth of a deepest portion of the second groove portion 239. In addition, in FIG. 5C, for convenience of description, the depth D2 of the second groove portion 239 is illustrated as being larger than the actual depth.

In addition, a depth D3 of the fluid recovery groove 237 is the same as the depth D1 of the first groove portion 238 (D1 = D3).

Incidentally, in the second embodiment, the depth D1 of the first groove portion 238 and the depth D3 of the fluid recovery groove 237 is approximately 25 times the depth D2 of the second groove portion 239, but may be freely changed, and is preferably approximately 5 to 50 times the depth D2.

In such a manner, since the fluid recovery groove 237 is a deep groove, a large amount of the fluid between the right surface 203a of the seal ring 203 and the right surface 1a of the annular groove 1A can be taken in, and the generation of dynamic pressure at an end portion on a relative rotation downstream side of the fluid recovery groove 237 can be avoided, and therefore, the pressure on the target sealed region (H) side can be efficiently reduced.

In addition, since the first groove portion 238 is a deep groove, the oil can be efficiently introduced into the second groove portion 239 from the first groove portion 238, and therefore, the dynamic pressure generation effect of the second groove portion 239 is enhanced.

In addition, since the second groove portion 239 becomes shallower from the upstream side toward the downstream side in the rotation direction of the rotating shaft 1, dynamic pressure can be efficiently generated due to the wedge effect of the second groove portion 239.

In addition, since the first groove portion 238 communicates with the fluid recovery groove 237 in addition to the target sealed region (H), a sufficient amount of the fluid is supplied to the dynamic pressure generation groove 236, and therefore, positive pressure can be reliably generated.

### {Third embodiment}

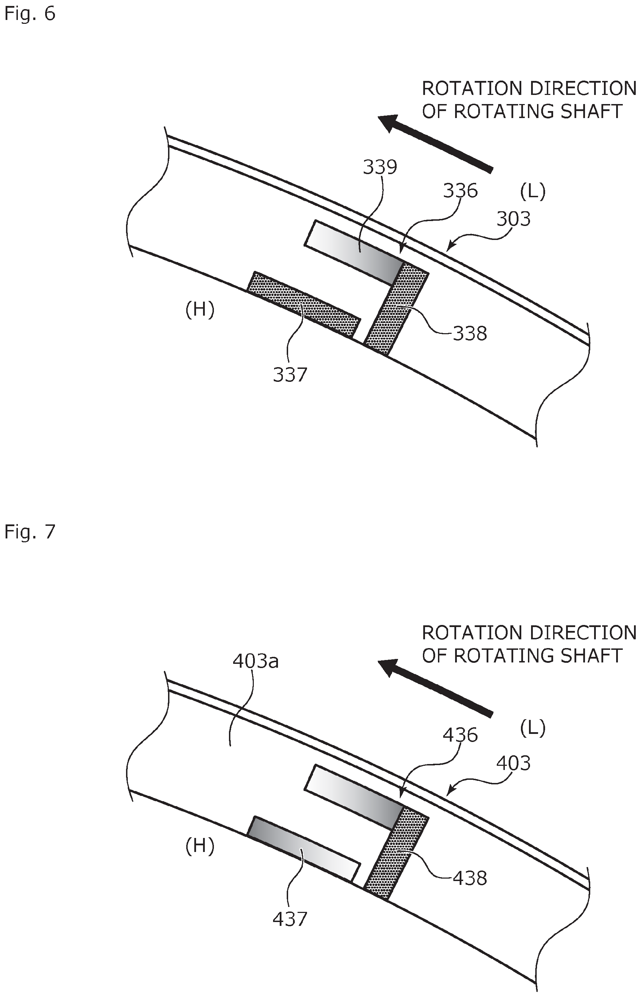

Next, a seal ring according to a third embodiment of the present invention will be described with reference to FIG. 6. Incidentally, the description of configurations that are the same as and overlap with the configurations of the first embodiment will be omitted. A dynamic pressure generation groove 336 of the third embodiment has the same configuration as the dynamic pressure generation groove 236 of the second embodiment.

As illustrated in FIG. 6, a fluid recovery groove 337 of a seal ring 303 of the third embodiment is separated from a first groove portion 338 of the dynamic pressure generation groove 336 in the circumferential direction. Namely, the fluid recovery groove 337 does not communicate with the first groove portion 338.

According to this configuration, since the fluid does not flow from the first groove portion 338 to the fluid recovery groove 337, the obstruction of the flow of the fluid flowing from the first groove portion 338 to a second groove portion 339 can be avoided.

### {Fourth embodiment}

Next, a seal ring according to a fourth embodiment of the present invention will be described with reference to FIG. 7. Incidentally, the description of configurations that are the same as and overlap with the configurations of the first embodiment will be omitted. A dynamic pressure generation groove 436 of the fourth embodiment has the same configuration as the dynamic pressure generation groove 236 of the second embodiment.

As illustrated in FIG. 7, a fluid recovery groove 437 of a seal ring 403 of the fourth embodiment is separated from a first groove portion 438 of a dynamic pressure generation groove 436 in the circumferential direction. Furthermore, the fluid recovery grooves 437 becomes shallower from the downstream side toward the upstream side in the rotation direction of the rotating shaft 1.

According to this configuration, since a relative negative pressure can be generated on a relative rotation upstream side of the fluid recovery grooves 437, the fluid between a right surface 403a of the seal ring 403 and the right surface 1a of the annular groove 1A is easily taken in.

### {Fifth embodiment}

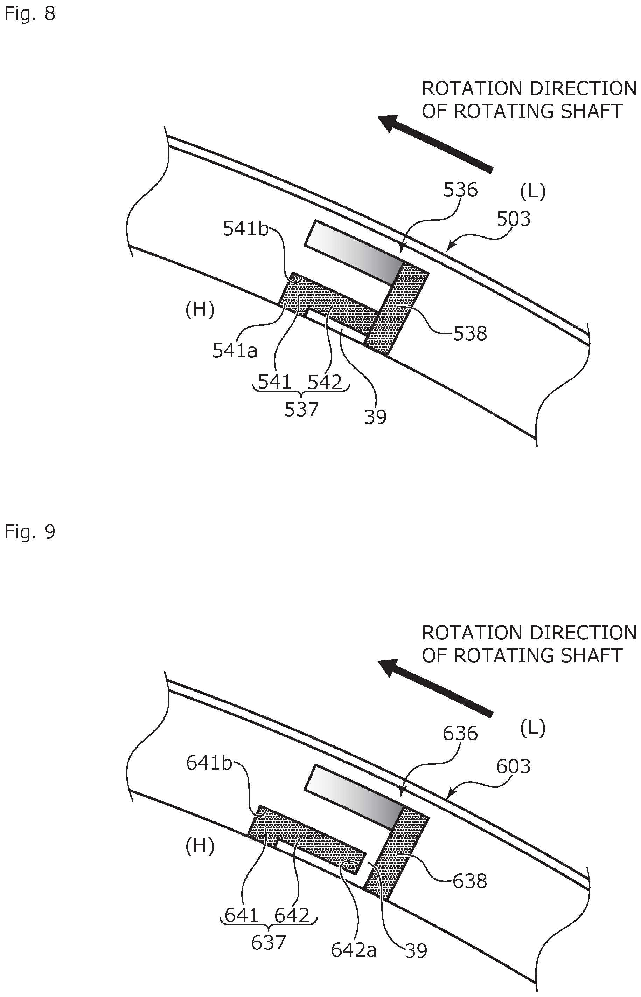

Next, a seal ring according to a fifth embodiment of the present invention will be described with reference to FIG. 8. Incidentally, the description of configurations that are the same as and overlap with the configurations of the first embodiment will be omitted. A dynamic pressure generation groove 536 of the fifth embodiment has the same configuration as the dynamic pressure generation groove 236 of the second embodiment.

As illustrated in FIG. 8, a fluid recovery groove 537 of a seal ring 503 of the fifth embodiment is composed of a first recovery groove portion 541 and a second recovery groove portion 542.

The first recovery groove portion 541 extends linearly in the radial direction from an inner diameter end 541a toward an outer diameter end 541b. The inner diameter end 541a communicates with the target sealed region (H). The outer diameter side of the outer diameter end 541b is closed.

The second recovery groove portion 542 extends in an arc shape from the outer diameter end 541b side of the first recovery groove portion 541 toward the upstream side in the rotation direction of the rotating shaft 1. An end portion on the relative rotation upstream side of the second recovery groove portion 542 communicates with a first groove portion 538 of the dynamic pressure generation groove 536. The second recovery groove portion 542 is formed such that a circumferential length is longer than a radial groove width.

In such a manner, as long as a part of the fluid recovery groove 537, namely, the inner diameter end 541a of the first recovery groove portion 541 communicates with the target sealed region (H), the land 39 may partially exist between the fluid recovery groove 537 and the target sealed region (H).

Incidentally, in the fifth embodiment, a mode in which one first recovery groove portion 541 is provided for one second recovery groove portion 542 has been provided as an example; however, a plurality of the first recovery groove portions 541 may be provided for one second recovery groove portion 542. According to this configuration, the second recovery groove portion 542 and the target sealed region (H) can communicate with each other through the plurality of first recovery groove portions 541.

### {Sixth embodiment}

Next, a seal ring according to a sixth embodiment of the present invention will be described with reference to FIG. 9. Incidentally, the description of configurations that are the same as and overlap with the configurations of the first embodiment will be omitted. A dynamic pressure generation groove 636 of the sixth embodiment has the same configuration as the dynamic pressure generation groove 236 of the second embodiment.

As illustrated in FIG. 9, a fluid recovery groove 637 of a seal ring 603 of the sixth embodiment is composed of a first recovery groove portion 641 and a second recovery groove portion 642.

The second recovery groove portion 642 extends in an arc shape from an outer diameter end 641b side of the first recovery groove portion 641 toward the upstream side in the rotation direction of the rotating shaft 1. An end portion 642a on the relative rotation upstream side of the second recovery groove portion 642 does not communicate with a first groove portion 638 of the dynamic pressure generation groove 636. In other words, the second recovery groove portion 642 and the first groove portion 638 are partitioned off from each other in the circumferential direction by the land 39.

### {Seventh embodiment}

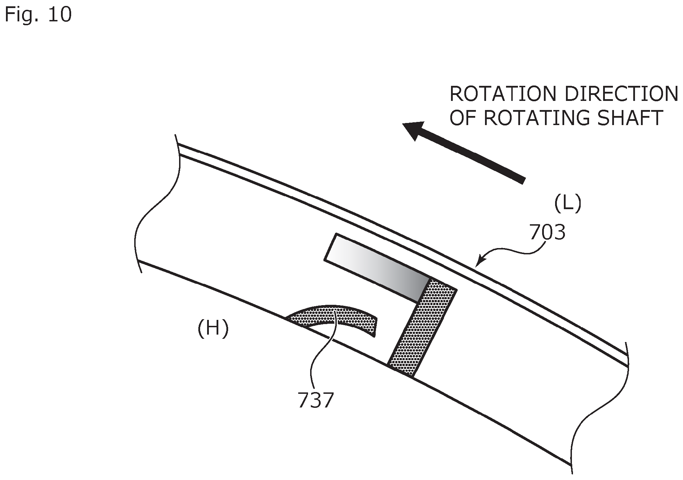

Next, a seal ring according to a seventh embodiment of the present invention will be described with reference to FIG. 10. Incidentally, the description of configurations that are the same as and overlap with the configurations of the first embodiment will be omitted. A dynamic pressure generation groove of the seventh embodiment has the same configuration as the dynamic pressure generation groove 236 of the second embodiment.

As illustrated in FIG. 10, a fluid recovery groove 737 of a seal ring 703 of the seventh embodiment is a spiral groove extending from the inner diameter side toward the outer diameter side while being inclined toward the upstream side in the rotation direction of the rotating shaft 1.

### {Eighth embodiment}

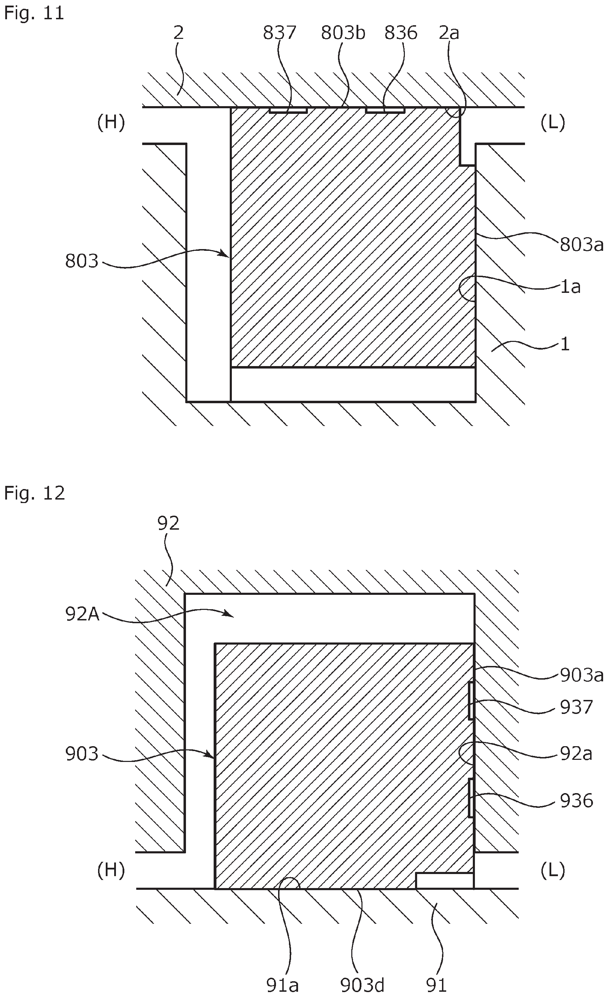

Next, a seal ring according to an eighth embodiment of the present invention will be described with reference to FIG. 11. Incidentally, the description of configurations that are the same as and overlap with the configurations of the first embodiment will be omitted.

As illustrated in FIG. 11, a right surface 803a serving as an installation surface is brought into press contact with the right surface 1a of the annular groove 1A of the rotating shaft 1 by fluid pressure, and a seal ring 803 of the eighth embodiment rotates together with the rotating shaft 1.

In the seal ring 803, a dynamic pressure generation groove 836 and a fluid recovery groove 837 are formed on an outer peripheral surface 803b serving as a sliding surface. The dynamic pressure generation groove 836 and the fluid recovery groove 837 communicate with the target sealed region (H) opposite to the right surface 803a on the outer peripheral surface 803b.

When the seal ring 803 rotates together with the rotating shaft 1, the outer peripheral surface 803b of the seal ring 803 and the inner peripheral surface 2a of the housing 2 slide against each other, dynamic pressure is generated in the dynamic pressure generation groove 836, the outer peripheral surface 803b of the seal ring 803 and the inner peripheral surface 2a of the housing 2 are separated from each other, and an oil film is formed.

At this time, since the fluid between the outer peripheral surface 803b of the seal ring 803 and the inner peripheral surface 2a of the housing 2 is recovered by the fluid recovery groove 837 located closer to the target sealed region (H) side than the dynamic pressure generation groove 836, and the pressure on the target sealed region (H) side decreases, tilting between the outer peripheral surface 803b of the seal ring 803 and the inner peripheral surface 2a of the housing 2 can be suppressed.

### {Ninth embodiment}

Next, a seal ring according to a ninth embodiment of the present invention ssswill be described with reference to FIG. 12. Incidentally, the description of configurations that are the same as and overlap with the configurations of the first embodiment will be omitted.

As illustrated in FIG. 12, in a shaft sealing device of the ninth embodiment, an annular groove 92A is formed in a housing 92, and a seal ring 903 is disposed in the annular groove 92A. Incidentally, an outer peripheral surface 91a of a rotating shaft 91 extends flat in the axial direction.

An inner peripheral surface 903d of the seal ring 903 that serves as an installation surface is brought into press contact with the outer peripheral surface 91a of the rotating shaft 91 by fluid pressure, and the seal ring 903 rotates together with the rotating shaft 91.

In addition, a right surface 903a of the seal ring 903 that serves as a sliding surface is brought into contact with a right surface 92a of the annular groove 92A by fluid pressure, and is slidable relative to the right surface 92a.

A dynamic pressure generation groove 936 and a fluid recovery groove 937 are formed on the right surface 903a of the seal ring 903. The dynamic pressure generation groove 936 and the fluid recovery groove 937 communicate with the target sealed region (H) opposite to the inner peripheral surface 903d on the right surface 903a.

When the seal ring 903 rotates together with the rotating shaft 91, the right surface 903a of the seal ring 903 and the right surface 92a of the annular groove 92A slide against each other, dynamic pressure is generated in the dynamic pressure generation groove 936, the right surface 903a of the seal ring 903 and the right surface 92a of the annular groove 92A are separated from each other, and an oil film is formed.

At this time, since the fluid between the right surface 903a of the seal ring 903 and the right surface 92a of the annular groove 92A is recovered by the fluid recovery groove 937 located closer to the target sealed region (H) side than the dynamic pressure generation groove 936, and the pressure on the target sealed region (H) side decreases, tilting between the right surface 903a of the seal ring 903 and the right surface 92a of the annular groove 92A can be suppressed.

The embodiments of the present invention have been described above with reference to the drawings; however, the specific configurations are not limited to these embodiments, and modifications or additions that are made without departing from the scope of the present invention are also included in the present invention.

For example, in the first to ninth embodiments, a mode in which the sliding surface and the installation surface of the seal ring are perpendicular to each other has been provided as an example; however, the sliding surface and the installation surface are not limited to being perpendicular to each other as long as the sliding surface and the installation surface extend in directions intersecting each other.

In addition, in the first to ninth embodiments, a mode in which the shaft rotates with respect to the housing has been provided as an example; however, the housing may rotate with respect to the shaft, or the shaft and the housing rotate together in a relative rotation direction.

In addition, in the first to ninth embodiments, a mode in which the fluid recovery mechanism has a circumferential component larger than a radial component has been provided as an example; however, the radial component may be larger than the circumferential component.

In addition, in the second to seventh embodiments, a mode in which the dynamic pressure generation mechanism is composed of a fluid introduction groove and a dynamic pressure generation groove has been provided as an example; however, the dynamic pressure generation mechanism may be, for example, a spiral groove or the like as in the dynamic pressure generation mechanism of the first embodiment.

In addition, the state of communication between the fluid recovery mechanism and the first space can be freely changed. The fluid recovery mechanism is not limited to communicating with the first space on the same surface as the sliding surface, and for example, the fluid recovery mechanism may be composed of a groove portion, the periphery of which on the first space side is surrounded by a land, and a through-hole communicating with the bottom of the groove portion and a side surface or a bottom surface of the seal ring.

### {REFERENCE SIGNS LIST}

- 1: Rotating shaft (shaft)
- 1A: Annular groove
- 1a: Right surface (counter-sliding surface)
- 2: Housing
- 2a: Inner peripheral surface (installed surface)
- 3: Seal ring
- 3a: Right surface (sliding surface)
- 3b: Outer peripheral surface (installation surface)
- 36: Dynamic pressure generation groove (dynamic pressure generation mechanism)
- 36a: Inner diameter end
- 36b: Outer diameter end (dynamic pressure generation portion)
- 37: Fluid recovery groove (fluid recovery mechanism)
- 37a: Inner diameter end
- 37b: Outer diameter end

## Claims

1. A seal ring, comprising:
a sliding surface that rotates and slides relative to a shaft or a housing through which the shaft is inserted; and
an installation surface that intersects the sliding surface and that is installed on the other of the shaft and the housing,
wherein the seal ring partitions a first space, which is located on a side opposite to a side on which the sliding surface intersects the installation surface, off from a second space disposed on the side on which the sliding surface intersects the installation surface, and
the sliding surface is provided with a dynamic pressure generation mechanism communicating with the first space and including a dynamic pressure generation portion, and a fluid recovery mechanism communicating with the first space and disposed closer to a first space side than the dynamic pressure generation portion.

2. The seal ring according to claim 1,
wherein the fluid recovery mechanism is formed to be long in a circumferential direction.

3. The seal ring according to claim 2,
wherein the fluid recovery mechanism communicates with the first space in the circumferential direction.

4. The seal ring according to claim 1,
wherein the fluid recovery mechanism is a deep groove.

5. The seal ring according to claim 1,
wherein the fluid recovery mechanism does not communicate with the dynamic pressure generation mechanism, and becomes shallower from a relative rotation downstream side toward a relative rotation upstream side.

6. The seal ring according to any one of claims 1 to 5,
wherein the dynamic pressure generation mechanism is composed of a fluid introduction groove communicating with the first space, and a dynamic pressure generation groove that extends in a circumferential direction from the fluid introduction groove and that is shallower than the fluid introduction groove.

7. The seal ring according to claim 1,
wherein the dynamic pressure generation groove becomes shallower from a relative rotation upstream side toward a relative rotation downstream side.

8. The seal ring according to claim 1,
wherein the fluid recovery mechanism communicates with a relative rotation downstream side of the fluid introduction groove.
